# EUROPEAN PATENT SPECIFICATION

(11) **EP 3 980 767 B1**
(45) Date of publication and mention of the grant of the patent: **28.08.2024**
(21) Application number: 20731424.6
(22) Date of filing: 03.06.2020
(51) Int. Cl.: G01N 27/22, A24B 9/00

(54) **MOISTURE METER**
FEUCHTIGKEITSMESSGERÄT
HYGROMÈTRE

(30) Priority: 07.06.2019 EP 19178997
(43) Date of publication of application: 13.04.2022
(73) Proprietor: JT International SA, 1202 Geneva (CH)
(72) Inventor: JANSON, Olaf, 33803 Steinhagen (DE); KÜMPEL, Jürgen, 54329 Konz (DE)
(74) Representative: Hannke, Christian
(86) International application number: PCT/EP2020/065356
(87) International publication number: WO 2020/245202

(56) References cited:
- WO-A1-2017/148828
- US-B2- 10 107 773
- ELSOBKY MOURAD ET AL: "Ultra-thin relative humidity sensors for hybrid system-in-foil applications", 2017 IEEE SENSORS, IEEE, 29 October 2017 (2017-10-29), pages 1 - 3, XP033281526, DOI: 10.1109/ICSENS.2017.8234298
- A V?SQUEZ QUINTERO ET AL: "Smart RFID label with a printed multisensor platform for environmental monitoring", FLEXIBLE AND PRINTED ELECTRONICS, vol. 1, no. 2, 17 May 2016 (2016-05-17), pages 025003, XP055417565, DOI: 10.1088/2058-8585/1/2/025003

## Description

The present invention is directed to a tobacco container comprising a moisture meter. It is known from the state of the art that the quality of various substances especially in the food or tobacco industry strongly depends on their moisture characteristics. Especially in case of tobacco the tobacco moisture level influences strongly the quality of the product. It is therefore desirable to control and/or supervise the moisture levels of such products.

Moisture meters are known in the state of the art, which serve to measure the moisture and especially an ambient moisture of an environment surrounding a specific product.

Such moisture meters, especially for granulate substances as for example tobacco have the disadvantage that they should preferably be put into or at least in-touch with the respective materials. Therefore, the specific moisture sensor can be spoiled or even contaminated by the respective material.

It is therefore an object of the invention to provide a tobacco container comprising a cavity for receiving a charge tobacco material and further comprising a moisture meter which allows to sense an ambient moisture and on the other hand avoids a spoiling of the sensor parts and/or of other elements of the moisture meter. This object is fulfilled by the object of claim 1. Preferable embodiments are object of the subclaims.

A moisture meter according to the invention comprises an energy source for supplying electrical energy to the moisture meter, a logic and a sensor for measuring ambient moisture. Furthermore, the moisture meter comprises a memory and an output for outputting at least one value characteristic for a measured moisture and at least one carrier, on which the energy source, the logic, the sensor, and the memory are arranged.

According to the invention, the moisture meter is encapsulated with a hermetic barrier, especially a hermetic barrier coating or film and/or inside a hermetic closed receptable or bag. It is therefore suggested, that the moisture meter itself is encapsulated inside a coating and/ or a receptacle as for example a bag. Therefore, it can be prevented that the respective parts of the moisture meter as especially the logic and the sensor are soiled by material as for example tobacco.

In a preferred embodiment, the moisture meter is suited for measuring a moisture of granulated material as especially but not exclusively tobacco. It is possible that the above-mentioned coating completely encompasses the moisture sensor. Also, it is possible that the moisture meter is arranged inside a closed receptable as for example a bag or the like.

As to be described into detail, the moisture meter according to the invention preferably allows the measurement of an ambient moisture especially outside the hermetic barrier although the measurement device itself is arranged inside this barrier and or receptable.

In another preferred embodiment the carrier is a sheet carrier and especially a flexible sheet carrier. The term flexible is to be understood that a certain bending of the carrier is possible without destroying or breaking the material of the carrier. In this way, the moisture meter can easily be adapted to different surroundings and especially different geometries, into which the meter is to be placed. In another preferred embodiment electronic components can be printed on the flexible sheet carrier.

In a preferred embodiment, the above-mentioned parts and the carrier are completely arranged inside a hermetic barrier, preferably a hermetic barrier coating and/ or a hermetic bag and/ or receptacle. Preferably, also this hermetic barrier (especially barrier coating) or hermetic bag is flexible as well. Therefore, also the encapsulation may be flexible.

In another preferred embodiment the hermetic barrier and/ or the flexible bags are made of an abrasion proof material. Therefore, it can be avoided that particles of this material come into contact with the environment and especially with the granulate material and especially with the tobacco to be investigated.

In another preferred embodiment, the hermetic barrier is made out of a material which is food compatible. In this embodiment, even particles, which reach the granulate to be investigated would not harm the user.

In another preferred embodiment, the hermetic barrier is made of a non-ferromagnetic material. Therefore, the material of this barrier is preferably non-electrically conductive. As mentioned above, it is preferable that the moisture meter is completely located inside hermetic barrier. However, it would be possible that a part of the meter is also located partially outside the hermetic barrier, for example through an opening therein.

In another preferred embodiment the moisture meter comprises a single carrier. In another preferred embodiment the carrier supports printed circuits and/or printed electronics. Preferably, the carrier material comprises any of a Polyethylene terephthalate-foil (PET) polyethylene naphthalate (PEN) and polyimide-foil (PI). Silicone or epoxy board based circuits are preferably avoided.

In another preferred embodiment the carrier has a length which is greater than 20mm, preferably greater than 40mm, preferably greater than 60mm. In another preferred embodiment the carrier has a length which is smaller than 200mm, preferably smaller than 150mm, preferably smaller than 120mm and preferably smaller than 100mm.

In another preferred embodiment, the moisture meter comprises a comparator, which serves to compare measured values with values stored in a memory device.

In another preferred embodiment the moisture meter works in a temperature range between minus 10°C and plus 60°C, preferably 0°C and 50°C, preferably 5°C and 30°C.

Especially the moisture meter is operable at room temperature. In another preferred embodiment, the energy source is a battery. However, it would also be possible that additionally or instead of a battery a solar cell is comprised. In another embodiment the energy source could also comprise an NFC element, for example an NFC chip (Near Field Communication). In this latter case it is possible that the moisture meter is energized by an energy provider which is preferably located outside the hermetic barrier. In this case the moisture meter can be energized by a user on demand.

According to the invention the moisture sensor is a capacity sensor. This means that the sensor is based on a technical principle of measuring a capacity which arises for example between two electrodes. In general, a capacitive moisture sensor for example measures relative moisture by placing a thin strip of metal oxide between two electrodes. The metal oxide's electrical capacity changes with the atmosphere's relative moisture.

In another preferred embodiment, the sensor is a coplanar capacitive moisture sensor. In this case the electrodes of such a sensor maybe arranged next to each other and preferably lying in the same plane. Preferably the above-mentioned hermetic barrier also is arranged adjacent to the electrodes. In this case also the moisture outside the barrier will influence the electric field between the electrodes and therefore the capacity of the coplanar capacity sensor.

This sensor serves specifically to sense and measure ambient or contained moisture through the hermetic barrier encapsulating the moisture meter of the invention.

In a preferred embodiment, the coplanar capacity sensor comprises a first armature plate and/ or a second armature plate, which are most preferably separated from each other. An electrical field between these two armature plates can be measured even if a barrier as for example a foil or the like is arranged between those plates and the ambient (outside).

An electric field between these coplanar capacity moisture sensors or the plates is also influenced by the environment.

Preferably, the above-mentioned barrier is arranged directly adjacent to at least one of the two mentioned plates and especially both of the two mentioned plates.

In another preferred embodiment the plates of the coplanar capacitive moisture sensor are embedded in masks.

In another preferred embodiment the plates of the moisture sensor are arranged on a substrate. In another preferred embodiment the plates of the moisture sensor are arranged on a printed circuit board (PCB). A printed circuit board (PCB) mechanically supports and electrically connects electronic components or electrical components using conductive tracks, pads and other features, preferably printed on a non-conductive substrate, or etched from one or more sheet layers of copper laminated onto and/or between sheet layers of a non-conductive substrate.

In another preferred embodiment, the sensor or the coplanar capacity humidity sensor is suited to measure an electric field outside the above-mentioned encapsulation and/ or coating.

In another preferred embodiment the output is a display. It is possible that the moisture meter itself contains a display. However, it is also possible that the display of another device, especially of a cell phone or the like is used. In this case, the output is for example a wireless emitter, which is provided to output and/ or send data , which are representative of moisture values measured by the sensor.

In another further embodiment, the display comprises at least one light emitting diode and/ or an electrochromic display. In case that one or several light emitting diodes are comprised, those diodes can be used for example to indicate if an ideal moisture is reached or if the moisture is lower or greater than a desired value. A display may indicate numerical moisture values for the measured moisture, with or without a indicative moisture unit. Here for example a relative moisture can be displayed.

It is also possible that only one light emitting diode is comprised, which may be able to radiate light in different colors. Therefore, for example a green color can be used to indicate that a desired value of moisture is reached and a red color that the moisture is not within desired limits.

In another preferred embodiment the moisture meter comprises an activation switch. For example, a button can be comprised, which for a certain time activates the moisture meter. In another preferred embodiment the device or the moisture meter comprises a time clock, for example to make sure that the device is not permanently activated but only in response of an activation of the above-mentioned activation switch. However, the moisture meter can also comprise an activation unit to remotely activate the moisture meter.

In another preferred embodiment the hermetic barrier coating is transparent at least in portions. Especially the coating and/ or the bag is transparent in the area of the above-mentioned display.

For the activation switch it is also possible that an activation or especially a remote activation is provided. For example, an activator may use an application on his smart phone to communicate with the moisture meter and thus activate the moisture meter remotely, for example by use of a cell phone, a tablet or the like.

In another preferred embodiment the hermetic barrier coating comprises a multi-layer including at least a parylene layer. Parylene based coatings, in particular plasma deposited multilaysers of parylene and silicone dioxide (SiO2) are particularly suitable for protecting the moisture meter of the present invention while preserving all its electrical and mechanical properties intact.

In another preferred embodiment the encapsulation comprises a flexible bag inside which the moisture meter is arranged.

In another preferred embodiment the hermetic barrier is at least attached and/ or adhered to another part of the moisture meter, especially to a part of the above-mentioned carrier. As mentioned above, the hermetic barrier is preferably a coating.

In another preferred embodiment the battery or the energy source is a printed battery. In this case, a capacity energy transfer is provided. However, it is also possible that the device and/ or the moisture meter is activated by induction. Also, as mentioned above, NFC technologies can also be used to activate the moisture meter.

In another preferred embodiment the battery and/ or the energy source is detachable from the carrier.

The present invention is furthermore directed to a tobacco container comprising a cavity for receiving a charge of tobacco material and further comprising a moisture meter of the above-mentioned kind. This moisture meter is arranged inside the said cavity so as to measure the ambient moisture within the cavity. In a preferred embodiment the moisture of tobacco surrounding the moisture meter is provided. In another preferred embodiment the moisture meter is arranged on a wall and/or attached to a wall of the cavity, wherein especially the sensor device is facing towards the interior of the cavity.

In another preferred embodiment the moisture meter comprises a first surface of a carrier and a second surface of a carrier, wherein the second surface of the carrier faces in the opposite direction as the first surface. In a preferred embodiment on the first surface of the carrier the sensor is arranged and on the second surface of the carrier the output device and especially the display. In this embodiment it is possible to accurately measure a moisture ambient of the moisture meter and on the other hand display the respective values (especially in the opposite direction).

In another preferred embodiment the container comprises at least one transparent region or one transparent window, especially in one of the cavity walls and the moisture meter is arranged inside the container with its output facing said transparent window. In this embodiment an accurate measurement of the moisture is possible and the respective values can be displayed through the said wall of the container.

Other features and advantages will become apparent from the attached drawings, wherein:
- Fig. 1: a view of a moisture meter according to the invention;
- Fig. 2: an illustration for explaining the technical principles of the invention; and
- Fig. 3: a view of a tobacco box comprising a moisture sensor according to the invention.

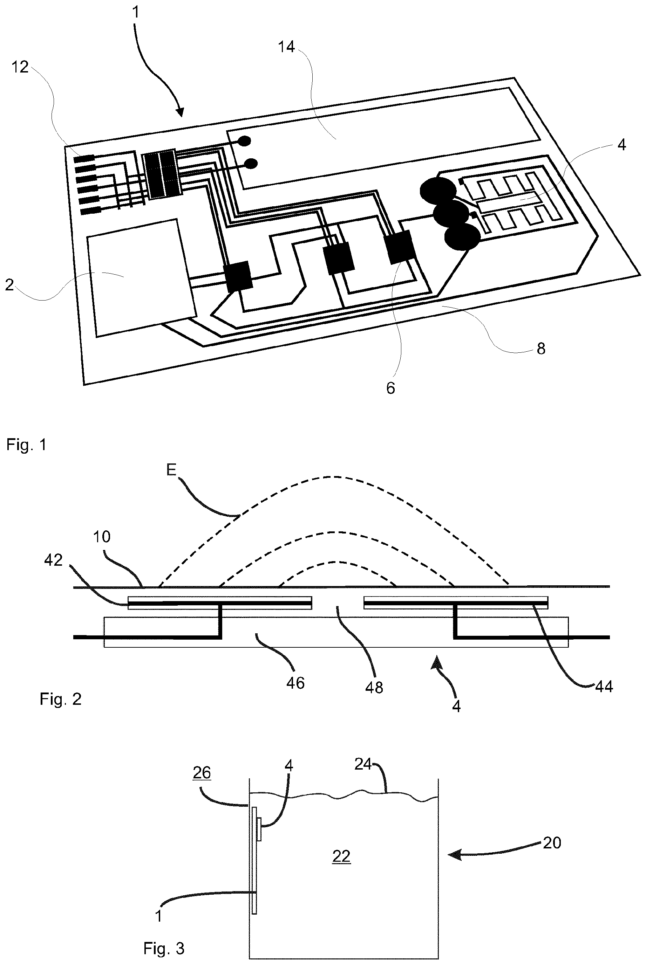

Figure 1 shows an illustration of a moisture meter 1 according to the invention. This moisture meter 1 comprises a carrier 8 on which electronic components are arranged. In detail, reference number 2 is directed to a battery, which is arranged on the carrier 8. Reference number 4 refers to a sensor, which serves to detect ambient moisture near or of a material, in particular tobacco, in contact with the moisture meter 1. Reference number 14 refers to a display serving as an output device by which measured values can be output.

Reference number 6 refers to a logic circuit. Reference number 12 refers to a memory device which is also arranged on the carrier. This memory device may store reference values of moisture.

In the preferred embodiment represented in figure 1 several and preferably all electrical components of the moisture meter are preferably printed electronic components formed by additive manufacturing, in particularly conductive ink and integrated circuits printing, onto a flexible, preferably transparent carrier 8, for example made of a flexible substrate, which lowers production costs and allows fabrication of mechanically flexible circuits. Polyethylene terephthalate-foil (PET) polyethylene naphthalate (PEN) and polyimide-foil (PI) are among preferred common choices for the carrier 8.

The electronic components, in particular circuitry, display 14, sensor 4, battery 2, logic 6 and memory 12 may be formed through conventional printing techniques, such as screen printing, flexography, gravure, offset lithography, and inkjet, which are all compatible to creating active or passive devices, such as thin film transistors; capacitors; coils; resistors.

Figure 2 represents the working principle of the moisture sensor 4 in the meter 1 of the present invention. This moisture sensor 4 comprises a first capacitor plate 42 and a second capacitor plate 44. Both capacitor plates 42 and 44 are arranged on the printed circuit PCB 46. Furthermore, the two capacitor plates 42 and 44 are embedded in a material 48.

The reference number 10 is directed to a barrier or a coating inside which the moisture meter is arranged to preserve its electrical components from direct moisture contact. A typical and particularly advantageous barrier layer coating 10 may advantageously comprise a parylene layer, well known and used in electronic and medical devices already.

A preferred barrier coating 10 may consist in a multilayer film of parylene-SiO2 formed through plasma deposition directly onto the moisture meter on all its faces. Such encapsulation technique ensures both moisture and corrosion resistance of the moisture meter 1 to environmental moisture/humidity, and is a medical grade encapsulation technology, readily available for example from swiss company Coat-X.

Reference number E is directed to an electric field, which builds up between the capacitor plates 42 and 44. As can be seen from figure 2 the barrier 10 is permeable to the electrical field E. Therefore, moisture outside the barrier 10 will influence the electrical field E and can therefore be measured by the sensor 4 although the sensor is concealed in the barrier 10.

Figure 3 shows a box or container containing a granulate material and especially tobacco 24. Also, inside this container 20 a moisture meter 1 is arranged. Preferably, this moisture meter 1 is attached at an inner wall 26 or close to an inner wall 26 of the container 1. While the sensor 4 device is located such that it can measure the ambient moisture in the interior of the receptacle, the wall 26 of the receptacle 20 is at least transparent in the region in which the moisture meter is attached and most preferably at least in the region where the output and the display device of the moisture meter is arranged. Therefore, the user can see or read the output device from the outside of the container 20.

### List of reference symbols

- 1: moisture meter
- 2: battery
- 4: sensor
- 5: receptacle
- 6: logic circuit
- 8: carrier
- 10: barrier, coating
- 12: memory device
- 14: display, output device
- 20: container
- 22: cavity
- 24: tobacco
- 26: wall of the container
- 42: first capacitor plate
- 44: second capacitor plate
- 46: printed circuit PCB
- 48: material
- E: electric field

## Claims

1. A tobacco container (20) comprising a cavity (22) for receiving a charge tobacco (24) material and further comprising a moisture meter (1) arranged in the cavity (22) so as to measure the ambient moisture within the cavity (22), the moisture meter (1) comprising an energy source (2) for supplying electrical energy to the moisture meter, a logic (6), a sensor (4) for measuring ambient moisture, a memory (12) and an output (14) for outputting at least one value characteristic for a measured moisture and at least one carrier (8) on which the energy source (2), the logic (6), the sensor (4), the memory (12) and the output (14) are arranged,
**characterized in that**
the moisture meter (1) is encapsulated within an hermetic barrier and the sensor (4) is a capacity moisture sensor (4).

2. Tobacco container according to claim 1
**characterized in that**
the carrier (8) is a flexible carrier (8).

3. Tobacco container according to at least one of the preceding claims
**characterized in that**
the hermetic barrier is a hermetic coating.

4. Tobacco container according to claim 1,
**characterized in that**
the sensor is a co-planar capacity moisture sensor.

5. Tobacco container according to at least one of the preceding claims
**characterized in that**
the output (14) is a display.

6. Tobacco container according to the preceding claim
**characterized in that**
the display (14) comprises at least one light emitting diode and/or an electrochromic display.

7. Tobacco container according to at least one of the preceding claims
**characterized in that**
the moisture meter (1) comprises an activation switch (18).

8. Tobacco container according to claim 6, **characterized in that** the activation switch (18) is a capacitive switch.

9. Tobacco container according to at least one of the preceding claims
**characterized in that**
the hermetic barrier is transparent at least in portions.

10. Tobacco container according to at least one of the preceding claims
**characterized in that**
the hermetic barrier coating (10) comprises a multilayer including at least a parylene layer.

11. Tobacco container according to at least one of the preceding claims
**characterized in that**
the energy source (2) is a printed battery (2).

12. Tobacco container according to at least one of the preceding claims
**characterized in that**
the carrier (8) is a flexible printed circuit board.

13. Tobacco container according to claim 1, comprising **characterized in that** the moisture meter (1) is arranged on a wall (26) of the cavity (22) with said sensor facing towards the interior of the cavity.

14. Tobacco container according to any of claims 1 or 13, **characterized in that** the container comprises at least one transparent window in one of the cavity walls and that the moisture meter is arranged in the container with its output facing said transparent window.

## Patentansprüche

1. Tabakbehälter (20) umfassend einen Hohlraum (22) zur Aufnahme von Fülltabak (24) Material und ferner umfassend einen Feuchtigkeitsmesser (1), der in dem Hohlraum (22) angeordnet ist, um die Umgebungsfeuchtigkeit innerhalb des Hohlraums (22) zu messen, das Feuchtigkeitsmessgerät (1) umfassend eine Energiequelle (2) zur Versorgung des Feuchtigkeitsmessgeräts mit elektrischer Energie, eine Logik (6), einen Sensor (4) zur Messung der Umgebungsfeuchte, einen Speicher (12) und einen Ausgang(14) zur Ausgabe mindestens eines Kennwertes für eine gemessene Feuchte und mindestens ein Träger (8) auf dem die Energiequelle (2), die Logik (6), der Sensor (4), der Speicher (12) und der Ausgang (14) angeordnet sind,
**dadurch gekennzeichnet, dass**
der Feuchtigkeitsmesser (1) in einer hermetischen Barriere gekapselt ist und der Sensor (4) ein Kapazitäts-Feuchtigkeitssensor (4) ist.

2. Tabakbehälter nach Anspruch 1,
**dadurch gekennzeichnet, dass**
der Träger (8) ein flexibler Träger (8) ist.

3. Tabakbehälter nach mindestens einem der vorhergehenden Ansprüche
**dadurch gekennzeichnet, dass**
die hermetische Barriere eine hermetische Beschichtung ist.

4. Tabakbehälter nach Anspruch 1,
**dadurch gekennzeichnet, dass**
der Sensor ein co-planarer Kapazitäts-Feuchtigkeitssensor ist.

5. Tabakbehälter nach mindestens einem der vorhergehenden Ansprüche
**dadurch gekennzeichnet, dass**
der Ausgang (14) eine Anzeige ist.

6. Tabakbehälter nach dem vorhergehenden Anspruch
**dadurch gekennzeichnet, dass**
die Anzeige (14) mindestens eine Leuchtdiode und/oder ein elektrochromes Anzeige umfasst.

7. Tabakbehälter nach mindestens einem der vorhergehenden Ansprüche
**dadurch gekennzeichnet, dass**
der Feuchtigkeitsmesser (1) einen Aktivierungsschalter (18) aufweist.

8. Tabakbehälter nach Anspruch 6,
**dadurch gekennzeichnet, dass** der Aktivierungsschalter
(18) ein kapazitiver Schalter ist.

9. Tabakbehälter nach mindestens einem der vorhergehenden Ansprüche
**dadurch gekennzeichnet, dass**
die hermetische Barriere zumindest in Teilen transparent ist.

10. Tabakbehälter nach mindestens einem der vorhergehenden Ansprüche
**dadurch gekennzeichnet, dass**
die hermetische Barrierebeschichtung (10) eine Mehrschicht umfasst, die mindestens eine Parylen Schicht enthält.

11. Tabakbehälter nach mindestens einem der vorhergehenden Ansprüche
**dadurch gekennzeichnet, dass**
die Energiequelle (2) eine gedruckte Batterie (2) ist.

12. Tabakbehälter nach mindestens einem der vorhergehenden Ansprüche
**dadurch gekennzeichnet, dass**
der Träger (8) eine flexible Leiterplatte ist.

13. Tabakbehälter nach Anspruch 1,
**dadurch gekennzeichnet, dass**
der Feuchtigkeitsmesser (1) an einer Wand (26) des Hohlraums (22) angeordnet ist, wobei der Sensor zum Inneren des Hohlraums gerichtet ist.

14. Tabakbehälter nach einem der Ansprüche 1 oder 13,
**dadurch gekennzeichnet, dass**
der Behälter mindestens ein transparentes Fenster in einer der Hohlraumwände aufweist und dass
der Feuchtigkeitsmesser in dem Behälter so angeordnet ist, dass sein Ausgang dem transparenten Fenster zugewandt ist.

## Revendications

1. Récipient à tabac (20) comprenant une cavité (22) pour recevoir une charge de tabac (24)
et comprenant en outre un hygromètre (1) disposé dans la cavité (22) de manière à mesurer l'humidité ambiante à l'intérieur de la cavité (22), l' hygromètre (1) comprenant une source d'énergie (2) pour fournir de l'énergie électrique à l' hygromètre, une logique (6), un capteur (4) pour mesurer l'humidité ambiante, une mémoire (12) et une sortie (14) pour délivrer au moins une valeur caractéristique d'une humidité mesurée et au moins un support (8) sur lequel la source d'énergie (2), la logique (6), le capteur (4), la mémoire (12) et la sortie (14) sont placés,
**caractérisé en ce que**
l'hygromètre (1) est encapsulé dans une barrière hermétique et le capteur (4)
est un capteur d'humidité de capacité (4).

2. Récipient à tabac selon la revendication 1
**caractérisé par le fait que**
le support (8) est un support flexible (8).

3. Récipient à tabac selon au moins une des revendications précédentes
**caractérisé par le fait que**
la barrière hermétique est un revêtement hermétique.

4. Récipient à tabac selon la revendication 1,
**caractérisé par le fait que**
le capteur est un capteur d'humidité à capacité coplanaire.

5. Récipient à tabac selon au moins une des revendications précédentes
**caractérisé par le fait que**
la sortie (14) est un écran.

6. Récipient à tabac selon la revendication précédente
**caractérisé par le fait que**
l'écran (14) comprend au moins une diode électroluminescente et/ou un écran électrochrome.

7. Récipient à tabac selon au moins une des revendications précédentes
**caractérisé par le fait que**
l' hygromètre (1) comprend un interrupteur d'activation (18).

8. Récipient à tabac selon la revendication 6, **caractérisé par le fait que** le commutateur d'activation (18) est un interrupteur capacitif.

9. Récipient à tabac selon au moins l'une des revendications précédentes
**caractérisé par le fait que**
la barrière hermétique est transparente au moins en partie.

10. Récipient à tabac selon au moins l'une des revendications précédentes
**caractérisé par le fait que**
le revêtement barrière hermétique (10) comprend une multicouche incluant au moins une couche de parylène
parylène.

11. Récipient à tabac selon au moins l'une des revendications précédentes
**caractérisé par le fait que**
la source d'énergie (2) est une batterie imprimée (2).

12. Récipient à tabac selon au moins l'une des revendications précédentes
**caractérisé par le fait que**
le support (8) est un circuit imprimé flexible.

13. Récipient à tabac selon la revendication 1, **caractérisé par le fait que** l' hygromètre (1) est placé sur une paroi (26) de la cavité (22), le capteur étant orienté vers l'intérieur de la cavité.

14. Récipient à tabac selon l'une des revendications 1 ou 13, **caractérisé par le fait que** le récipient
comprend au moins une fenêtre transparente dans l'une des parois de la cavité et que l'hygromètre est placé dans le récipient avec sa sortie orientée vers ladite fenêtre transparente.
